# EUROPEAN PATENT APPLICATION

(11) **EP 1 997 594 A1**
(43) Date of publication of application: **03.12.2008**
(21) Application number: 08156263.9
(22) Date of filing: 15.05.2008
(51) Int. Cl.: B25J 15/06, B28B 13/06

(54) **Unit for picking up ceramic products or the like**

(30) Priority: 31.05.2007 IT BO20070386
(71) Applicant: SACMI COOPERATIVA MECCANICI IMOLA SOCIETA' COOPERATIVA, 40026 Imola (BO) (IT)
(72) Inventor: Bambi, Domenico, 40054 Budrio (Bologna) (IT); Medri, Ivano, 48022 Lugo (Ravenna) (IT)
(74) Representative: Lanzoni, Luciano

(57) **Abstract**

A unit for picking up ceramic products or the like comprises: a tray (2) associated with a movement unit (3); a sealing and contact element (4) located at least along the perimeter of an operating wall (5) of the tray (2) and designed to work in contact with a surface (S) of the product (M); means (6) for generating a vacuum inside at least one first chamber (C) made by the operating wall (5) of the tray (2) with the inside of the tray (2) itself and in communication with a second chamber (Ce) through the operating wall (5), which is permeable; the second chamber (Ce) is delimited perimetrically according to the surface (S) of the product (M) in such a way that the above mentioned vacuum is applied to the opposite and facing surfaces of the wall (5) and of the surface (S) of the product (M), respectively, when the element (4) comes into stable contact with the surface (S) in order to pick the product up; the contact and sealing element is composed of a body (4) having controlled porosity, associated with the tray (2) and defining a part of the wall (5); the body (4) constitutes a seal which is applied to a surface (4a) making stable contact with the surface (S) of the product (M) and which is more deformable than the supporting tray (2).

## Description

This invention relates to a unit for picking up ceramic products or the like, in particular ceramic products constituting parts of sanitaryware.

As is well known, ceramic sanitaryware (such as washbasins, toilet bowls, bidets, flush tanks and the like) is made by casting a fluid mixture (known as "slip" in the jargon of the trade, consisting of a ceramic body in aqueous suspension) in customary moulds with a porous structure, which may be divided into two or more parts.

The mould gives the article of sanitaryware the required shape and after a certain length of time (necessary to draw out a part of the water) the article is extracted from the mould in a solid form, known as "greenware" (still having a water content of between 17% and 20% by weight) and hence still subject to plastic deformation.

Some of these products, such as, for example, flush tank lids, because they are small in size and relatively simple in shape, are preferably made using individual moulds having two or more cavities located side by side so that a large number of products can be obtained in a single casting cycle. In addition to that, the simultaneous extraction of these products from the mould (by opening it into its two half-moulds), an operation known as demoulding, is usually performed by a servo- or robot-controlled mechanical device equipped with an extraction tray mounted on an operating arm.

At present, the extraction tray consists of at least one operating pickup surface having at least one perimetric gasket for contact with the product and a central cavity for generating the vacuum necessary for picking up the product.

The mechanical device moves the gasket into contact with a surface of the product, activates the vacuum generating means to enable the product to be picked up and then transfers the product to a table, normally horizontal, where finishing operations are performed on it.

A product like the one mentioned above can be handled in two different ways: by its "noble" surface (that is to say, the surface that will be in view when the finished product is assembled) or by the opposite, less noble, surface that will be hidden by the other part of the flush tank.

At present, both these solutions have some disadvantages:
- if the lid is picked up by the noble surface, there is the risk of the pickup device leaving permanent marks on it due to the inevitable contact with the gasket or equivalent suction cup systems (it should be remembered that the product is still in a plastically deformable state); these marks may be visible as depressions or irregular impressions on the surface of the finished product.
- if the lid is picked up by the less noble surface, additional trays must be provided on which the product can be deposited to enable finishing operations to be carried out; the supporting surface of these trays must be shaped (for example slightly arched and hardly every flat) to match the shape of the noble surface, which means that each different lid shape requires a specific deposit tray to be made.

In other words, picking up the products in the green state by the noble surfaces has the obvious advantage of making subsequent operations simpler since the opposite surfaces (less noble) are usually flat and do not require particularly complex trays, but increases the risk of marking the noble surfaces and thus raises the number of end products that must be scrapped.

Picking up the product in the green state by the less noble surface, on the other hand, reduces the risk of marking the visible parts but requires a large number of accessories for subsequent operations, thus increasing production cycle times and costs and reducing production efficiency.

Moreover, whether a product is picked by its noble or less noble surface, there is always the risk of its sticking to the tray, after being demoulded, on account of the vacuum and the fact that the surface by which it is picked is wet. That means the product must be forcibly removed from the tray - for example reversing the direction of air flow or even manually - thus obviously slowing down production and creating the risk of damaging the product.

Moreover, in moulds with multiple, side-by-side cavities (for example, four) made by the same die, repeatability of the centre distances between product shapes is difficult to achieve on account of the chemical process involved in the production of the mould.

This non-repeatability creates a tolerance of a few millimetres in the centre distances of the two shapes at the ends of the moulds, which may make it difficult for the demoulding unit to pick up some of the products from the mould (especially, for obvious reasons, the one at the end furthest away from the robot), with the risk of damaging the surface of the product, especially if it is picked up by its noble surface.

This invention has for an aim to overcome the above mentioned disadvantages by providing a unit for picking up ceramic products or the like which can hold the ceramic product securely and effectively by its noble surface and which has a low impact on the surface on the same side so as to reduce the risk of marking that side.

Accordingly, this invention achieves this aim by providing a unit for picking up ceramic products or the like comprising the technical characteristics set out in one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a perspective exploded view, with some parts cut away to better illustrate others, of a part of the unit according to the invention, for picking up ceramic products or the like;
- Figure 2 is a perspective view of a part of a multiple pick-up unit according to the invention;
- Figure 3 is a perspective view showing a part of the unit of Figure 1 holding a product, which is illustrated partially;
- Figure 4 is a front view of the unit of Figure 1;
- Figure 5 is a rear perspective view of a part of the unit of Figure 1;
- Figure 6 is a schematic side view, with some parts cut away in order to better illustrate others, illustrating the multiple pick-up unit of Figure 2;
- Figure 7 is a schematic, exploded side view, with some parts cut away and others in cross section, showing a set of components of a single pick-up unit.

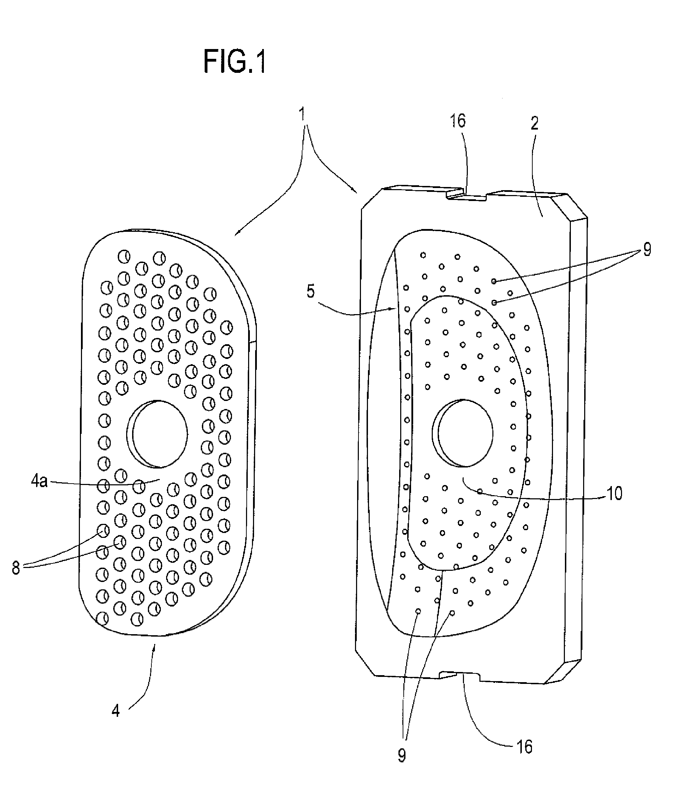

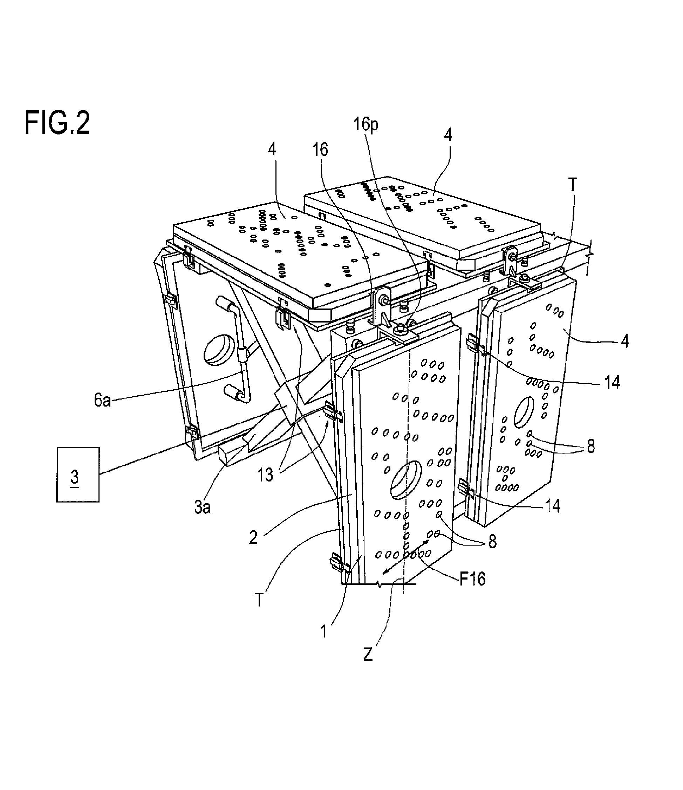

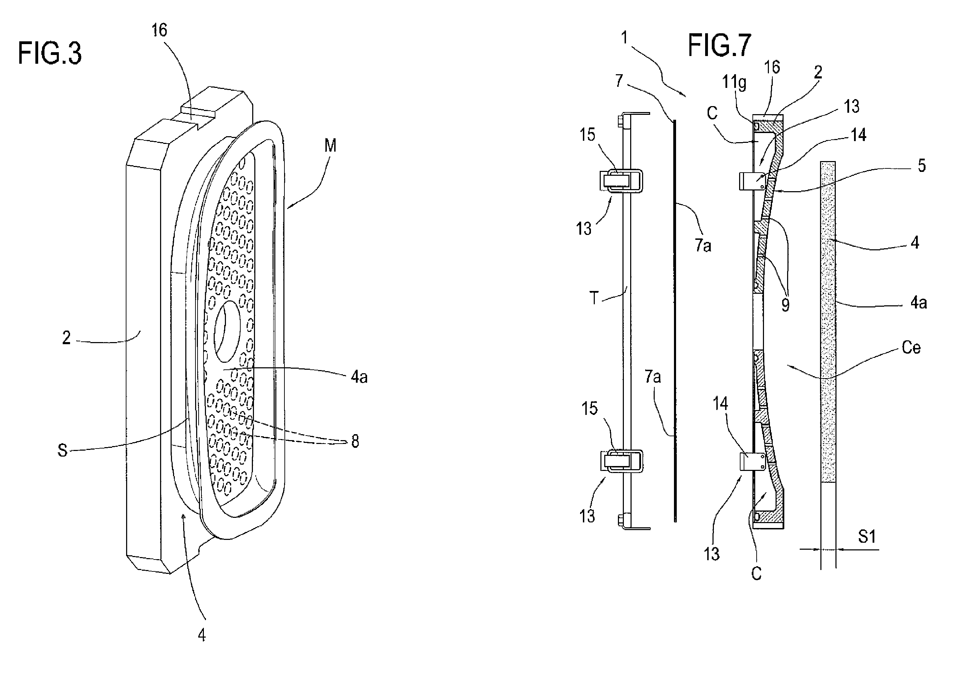

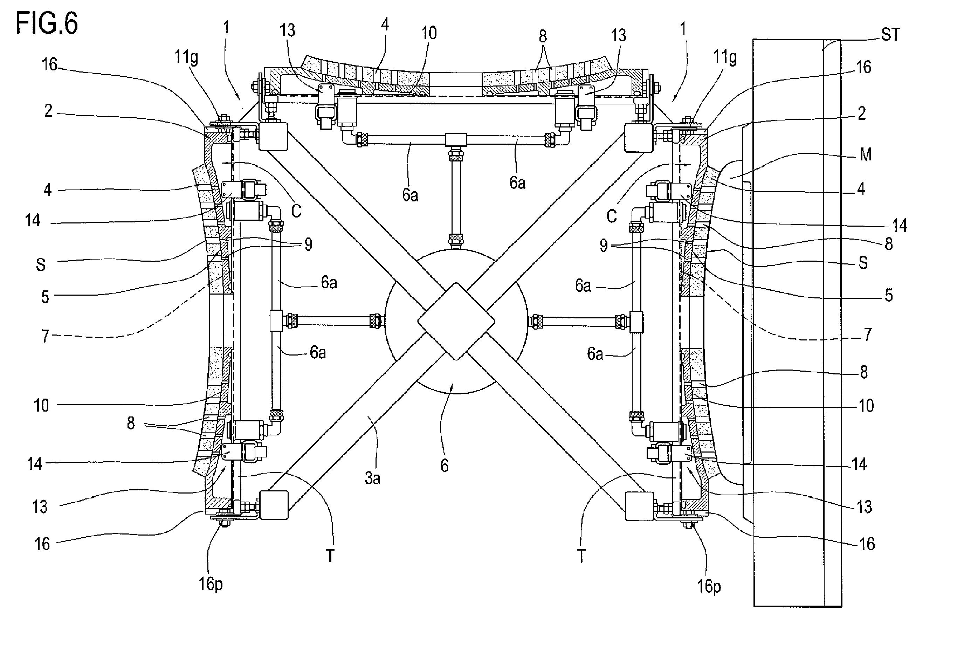

With reference to the accompanying drawings, in particular Figures 1 and 2, the unit according to the invention is used for picking up ceramic products M or the like, such as for, example, the flush tank lid illustrated partially in Figures 3 and 6.

In particular, the unit, which is labelled 1 in its entirety, is used for extracting the products M from the respective half moulds ST (shown partially in Figure 6) after a known step of making the products M by casting a fluid mixture (known as slip in the jargon of the trade, consisting of a ceramic body in aqueous suspension) in customary moulds with a porous structure.

The unit 1 basically comprises:
- a tray 2 associated with a movement unit 3 (for example, but without limiting the scope of the invention, of the robot-controlled type) illustrated schematically as a block in Figure 2 since it is known to experts in the trade and connected (in the case illustrated of a multiple unit 1) to a mounting structure 3a;
- a contact and sealing element 4 located at least along the perimeter of at least one operating wall 5 of the tray 2 and designed to work in contact with a surface S of the product M;
- means 6 for generating a vacuum inside at least one first chamber C made by the operating wall 5 of the tray 2 with the inside of the tray 2 itself (as described in more detail below) and in communication with a second chamber Ce through the operating wall 5, which is permeable thanks to intrinsic porosity or passages (holes made in the wall 5) made especially for this purpose (as explained below).

As shown in the accompanying drawings, the second chamber Ce is delimited perimetrically according to the surface S of the product M in such a way that the above mentioned vacuum is applied to the opposite and facing surfaces of the wall 5 and of the surface S of the product M, respectively, when the element 4 comes into stable contact with the surface S in order to pick the product up.

As clearly shown in Figures 1 to 4, the contact and sealing element is composed of a body 4 having controlled porosity, associated with the tray 2 at the second chamber Ce to define a part of the operating wall 5 of the tray 2 and partly closing the second chamber Ce itself.

The body 4 constitutes a seal which is applied to a surface 4a making stable contact with the surface S of the product M and which is more deformable than the supporting tray 2.

In particular, the contact element 4 is a spongy, highly deformable body.

More specifically, the spongy contact body 4 has, as mentioned above, controlled porosity obtained mechanically through respective channels 8 distributed on its surface so as to enable stable contact between the body 4 itself and the surface S of the product M when the vacuum generating means 6 are activated.

Further, the spongy body 4 preferably has uniform thickness S1 over the whole of it.

The spongy body 4 is of the closed cell type so that only the channels 8 allow air to pass through from the outside to the inside, while the other parts of it are impermeable to air so that vacuum inside the channels 8, when required, cannot escape.

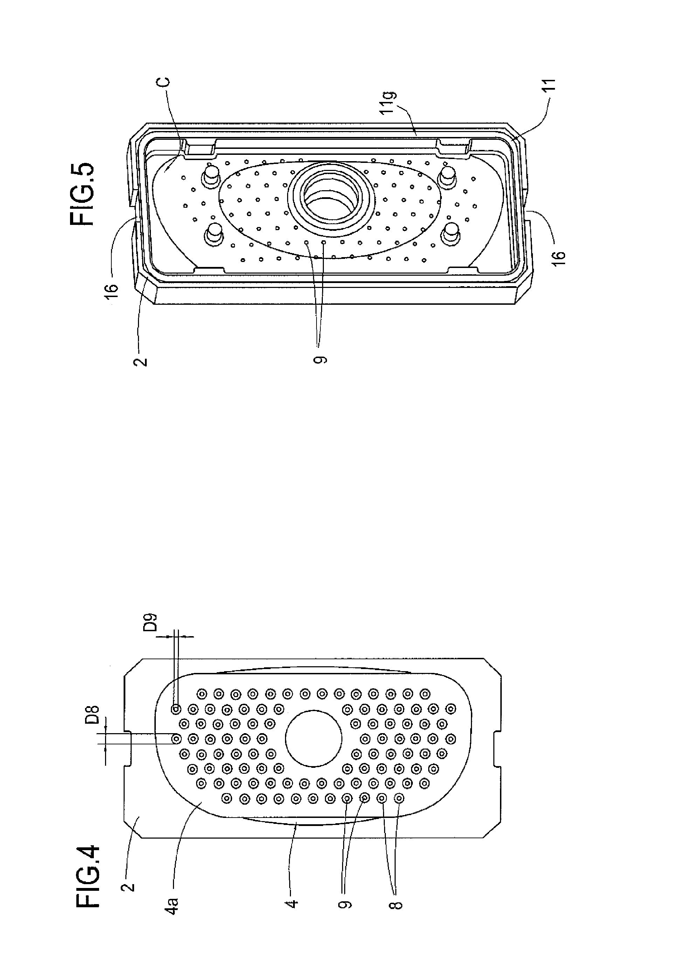

The above mentioned controlled porosity of the spongy body 4 is provided by a plurality of holes 8 passing through it, whose distribution, size and number are correlated to the total contact surface 4a of the spongy body 4 itself (see Figure 4) and which communicate with a corresponding number of second holes 9 (being, for example, but without limiting the scope of the invention, positioned coaxially with them) made in the operating wall 5 of the tray 2 (connecting the first and second chambers C and Ce) so as to allow air to pass from the outside to the inside when the vacuum generating means 6 are activated.

Preferably, the diameter D8 of the first holes 8 in the spongy body 4 is larger than the diameter D9 of the second through holes 9 in the operating wall 5 of the tray 2 so as to optimize the passage of the air from the outside to the inside, enabling the surface S to adhere correctly.

In one preferred, non-limiting embodiment, the shape of the spongy body 4 around its perimeter matches the contact surface S of the product M.

The tray 2 (see Figures 3 to 7) comprises a surface 10 extending on the outside of the operating wall 5 and matching the shape of the spongy body 4 with which it is associated (for example by gluing) to form a wall that partly fills the second chamber Ce.

Around its perimeter the surface 10 is also preferably shaped to match the shape of the surface S of the product M to be picked up.

The second holes 9 that communicate with the corresponding first holes 8 are made in the surface 10.

The tray 2 may also be providcd with sealing means 11 interposed between a rear surface of it and a lid 7 (see Figures 5 and 7, in particular), these sealing means 11 delimiting the vacuum chamber C and preventing air from being sucked in when the vacuum generating means 6 are switched on.

Looking in more detail, the sealing means 11 may comprise a gasket 11g fitted perimetrically in a groove 12 in the tray 2 and, during use, in contact with the front of the lid 7.

Further, during use, the lid 7 may also be interposed between the tray 2 and a supporting frame T that can be associated with the mounting structure 3a.

In another embodiment, the lid 7 may be an integral part of the tray 2, manufactured as a single part with it, or irremovably associated with it.

Also, the lid 7 has at least one hole 7a or, preferably, two holes 7a for connection to the vacuum generating means 6 through respective air suction pipes 6a.

Between the tray 2 and the frame T there are operating means 13 for quick fastening / unfastening of the tray 2 in order to enable the part of the operating unit fitted to be substituted quickly and easily with a new or regenerated one, for example when the former needs to be removed for cleaning.

The quick fastening/unfastening means 13 (see Figures 2 and 7) may comprise at least two pairs of hooks 14 fixed to the respective sides of the tray 2 and designed to be engaged by respective retaining ring levers 15 fixed to the corresponding sides of the frame T.

Another technical feature of the tray 2 is the presence of two indentations 16 made in the top and bottom edges of the tray 2 to allow the tray 2 a certain "range" of transversal movement (during assembly, see arrows F16) relative to a central longitudinal axis Z of the mounting structure 3a and designed to be engaged by respective adjustable reference bolts 16p fixed to the frame T and to a bracket on the mounting structure 3a.

A pick-up unit made as described above fully achieves the aforementioned aims thanks to the spongy body which comes into contact with the product and which allows:
- a secure hold on the product while at the same time protecting the noble surface of the product (because it is more deformable and thus makes contact with the product "softly" and accommodates it smoothly);
- greater protection between the product and the suction areas of the unit, limiting the entry of solid slip particles into the suction areas (thanks to the controlled porosity);
- quicker and easier maintenance of the interface thanks to the fastening/unfastening means on the tray and the possibility of washing and regenerating the spongy body;
- the large hold surface of the spongy body and the system for adjusting the position of the tray make it possible to compensate for different centre distances between products cast side by side in a multiple-cavity mould.

The invention described above is susceptible of industrial application and may be modified and adapted in several ways without thereby departing from the scope of the inventive concept. Moreover, all details of the invention may be substituted by technically equivalent elements.

## Claims

1. A unit for picking up ceramic products or the like, said unit (1) comprising at least:
- a tray (2) associated with a movement unit (3);
- a sealing and contact element (4) located at least along the perimeter of at least one operating wall (5) of the tray (2) and designed to work in contact with a surface (S) of the product (M);
- means (6) for generating a vacuum inside at least one first chamber (C) made by the operating wall (5) of the tray (2) with the inside of the tray (2) itself and in communication with at least one second chamber (Ce) through the operating wall (5), which is permeable; the second chamber (Ce) being delimited perimetrically according to the surface (S) of the product (M) in such a way that the above mentioned vacuum is applied to the opposite and facing surfaces of the wall (5) and of the surface (S) of the product (M), respectively, when the element (4) comes into stable contact with the surface (S) in order to pick the product up; the unit (1) being **characterized in that** the contact and sealing element is composed of a body (4) having controlled porosity, associated with the tray (2) at the second chamber (Ce); the body (4) constituting a seal which is applied to a surface (4a) making stable contact with the surface (S) of the product (M) and which is more deformable than the tray (2).

2. The unit according to claim 1, **characterized in that** the contact body (4) is spongy and highly deformable.

3. The unit according to claim 1, **characterized in that** the contact body (4) is spongy and has controlled porosity obtained through respective channels (8) enabling stable contact between the body (4) itself and the surface (S) of the product (M) when the vacuum generating means 6 are activated.

4. The unit according to claim 3, **characterized in that** the contact body (4) is spongy and has a closed cell structure so that only the channels (8) allow air to pass through from the outside to the inside, while the other parts of it are impermeable to air.

5. The unit according to claim 1, **characterized in that** the contact body (4) is spongy and is provided with a plurality of first holes (8) passing through it whose distribution, size and number are correlated to the total contact surface (4a) of the body (4) itself and which communicate with a corresponding number of second through holes (9) made in the operating wall (5) of the tray (2) for connecting the first and second chambers (C, Ce) so as to allow air to pass from the outside to the inside when the vacuum generating means (6) are activated.

6. The unit according to claim 5, **characterized in that** the first holes (8) in the spongy body (4) are larger in diameter (D8) than the diameter (D9) of the second through holes (9) made in the operating wall (5) of the tray (2).

7. The unit according to claim 1, **characterized in that** the contact body (4) is spongy and has uniform thickness (S1) over the whole of it.

8. The unit according to claim 1, **characterized in that** the contact body (4) is spongy and is shaped around its perimeter to match the contact surface (S) of the product (M).

9. The unit according to claim 1, **characterized in that** the tray (2) comprises a surface (10) shaped to match the contact body (4) with which it is associated; said surface (10) being provided with a plurality of second holes (9) that communicate with corresponding first holes (8) made in the contact body (4); said surface (10) defining the second chamber (Ce) in contact with the body (4).

10. The unit according to claim 1, **characterized in that** the tray (2) is provided with sealing means (11) interposed between a rear surface of it and a lid (7), said sealing means (11) being designed to delimit the vacuum chamber (C) and to prevent air from being sucked in when the vacuum generating means (6) are switched on.

11. The unit according to claim 1, **characterized in that** the sealing means (11) comprise a gasket (11g) fitted perimetrically in a groove (12) in the tray (2) and, during use, in contact with the front of the lid (7).

12. The unit according to claims 1 and 10, **characterized in that** the lid (7) is interposed between the tray (2) and a supporting frame (T) that can be associated with the movement unit (3).

13. The unit according to claims 1 and 10, **characterized in that** the lid (7) is provided with at least one hole (7a) for connection to the vacuum generating means (6) through a respective air suction pipe (6a).

14. The unit according to claims 1 and 10, **characterized in that** the lid (7) is an integral part of the tray (2).

15. The unit according to claim 1, **characterized in that** between the tray (2) and the frame (T) there are operating means (13) for quick fastening/unfastening of the tray (2) to/from the frame (T).

16. The unit according to claim 15, **characterized in that** the quick fastening/unfastening means (13) comprise at least two pairs of hooks (14) fixed to the respective sides of the tray (2) and designed to be engaged by respective retaining ring levers (15) fixed to the frame (T).

17. The unit according to claim 1, **characterized in that** the tray (2) has at least two indentations (16) made in its top and bottom edges to allow the tray (2) a certain "range" of transversal movement relative to a central longitudinal axis (Z) of a mounting structure (3a) and designed to be engaged by respective adjustable reference bolts (16p) fixed to a frame (T) and to the mounting structure (3a) connected to the movement unit (3).

18. The unit according to claim 1, **characterized in that** the operating wall (5) has a surface (10) that is shaped to match the surface (S) of the product (M).
